(19) Europäisches Patentamt
European Patent Office
Office européen des brevets

(11) Veröffentlichungsnummer: **0 035 162**
**A2**

(12) **EUROPÄISCHE PATENTANMELDUNG**

(21) Anmeldenummer: **81101110.5**

(22) Anmeldetag: **17.02.81**

(51) Int. Cl.³: **C 07 F 9/40**, C 08 G 79/04, C 08 K 5/53, D 06 M 13/28

(30) Priorität: **29.02.80 DE 3007714**

(43) Veröffentlichungstag der Anmeldung: **09.09.81**
**Patentblatt 81/36**

(84) Benannte Vertragsstaaten: **AT BE CH DE FR GB IT LI NL**

(71) Anmelder: **HOECHST AKTIENGESELLSCHAFT, Postfach 80 03 20, D-6230 Frankfurt/Main 80 (DE)**

(72) Erfinder: **Dürsch, Walter, Dr., In der Braubach 4, D-6240 Königstein/Taunus (DE)**
Erfinder: **Linke, Fritz, Dr., Im Flemetz 8, D-6240 Königstein/Taunus (DE)**
Erfinder: **Nischwitz, Ehrenfried, Dr., Feldbergstrasse 76, D-6348 Schmitten/Taunus (DE)**

(54) **Oligomere Phosphonsäureester und deren Verwendung als Flammhemmittel.**

(57) Oligomere Phosphonsäureester, die erhalten werden durch Umsetzung von sauren Phosphonsäurederivaten der Formel I

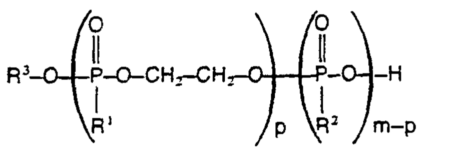

(I),

worin $R^1$ und $R^2$ gleiche oder verschiedene gesättigte oder ungesättigte geradkettige oder verzweigte aliphatische alicyclische, aromatische oder araliphatische Kohlenwasserstoffreste mit 1–8 Kohlenstoffatomen, bevorzugt $C_1$–$C_3$-Alkyl, besonders bevorzugt Vinyl,

$R^3$ Wasserstoff, Alkyl mit 1–4 Kohlenstoffatomen, Alkenyl mit 3 oder 4 Kohlenstoffatomen oder 2-Hydroxiethyl, bevorzugt Ethyl, besonders bevorzugt Methyl,

m Zahlen von 2–20, bevorzugt 2–6,

p Zahlen von 0–19, bevorzugt 0 oder von 1,5 bis 5, bedeuten,

mit Ethylenoxid umsetzt und deren Verwendung als Flammhemmittel.

EP 0 035 162 A2

0035162

HOECHST AKTIENGESELLSCHAFT HOE 80/F 036 Dr.OT/ss

# Oligomere Phosphonsäureester und deren Verwendung als Flammhemmittel

Die Herstellung von oligomeren Phosphonsäureestern, die als Flammhemmittel verwendet werden können, ist bekannt.

Gemäß DE-OS 2 726 478 werden oligomere Phosphonsäureester durch Umsetzung von oligomeren Phosphonsäureanhydrid-Phosphonsäure-Addukten der Formel

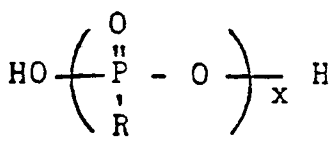

worin x Zahlen von 2 - 10 bedeuten, mit überschüssigem Ethylenoxid erhalten. Nachteilig bei diesem Verfahren ist, daß bei Phosphonsäuren, bei denen bei der Synthese primär die Ester anfallen, wie z.B. bei Methan-, Äthan- und Propanphosphonsäure, zunächst die freien Phosphonsäuren und daraus erst noch die Phosphonsäureanhydride hergestellt werden müssen und daß bei den technisch besonders interessanten Vinylphosphonsäurederivaten die Herstellung von Vinylphosphonsäuredichlorid und seine Umsetzung zu Vinylphosphonsäureanhydrid zwingend notwendig sind.

In der DE-OS 2 249 336 werden z.B. oligomere Verbindungen mit Resten der Formel

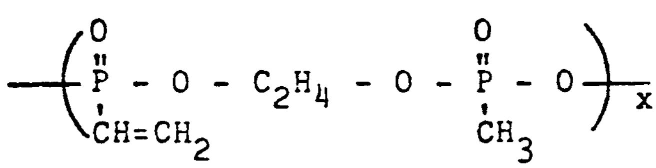

wobei x die obengenannte Bedeutung besitzt, durch Erhitzen von Vinylphosphonsäure-bis-chlorethylester mit Methanphosphonsäure-dimethylester erhalten. Dabei wird in großen Mengen gasförmiges Methylchlorid abgespalten, das aus Umweltschutzgründen besonders bei Großansätzen mit relativ großem technischen Aufwand aufgefangen werden muß.

Außerdem enthalten die Endprodukte von der Herstellung her Chlor. Im Brandfall entsteht daraus unerwünschter aggressiver Chlorwasserstoff.

Schließlich geht noch aus dem Britischen Patent 1 080 938 hervor, daß z.B. Alkyl-2-hydroxiethyl-ester der Phosphorsäure unter Abspaltung von Alkoholen in oligomere Phosphorsäureester übergeführt werden können. Oligomere Phosphorsäureester haben wegen ihrer großen Hydrolyseanfälligkeit bisher noch keine Verwendung als aus wässrigen Flotten anwendbare Flammhemmittel gefunden.

Es wurde nun überraschenderweise ein gegenüber den Vorveröffentlichungen vereinfachtes und umweltfreundlicheres Verfahren zur Herstellung von auch aus wässrigen Flotten anwendbaren Flammhemmitteln auf Basis von oligomeren Phosphonsäureestern gefunden.

Gegenstand der Erfindung sind somit oligomere Phosphonsäureester, die erhalten werden, indem man saure Phosphonsäurederivate der Formel I

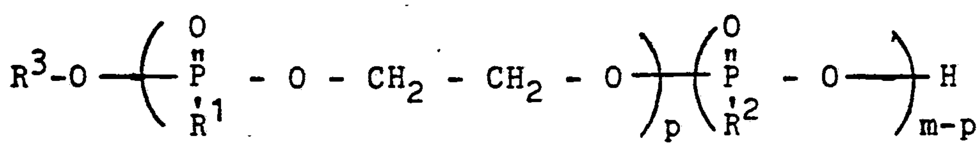

(I),

worin $R^1$ und $R^2$ gleiche oder verschiedene gesättigte oder ungesättigte geradkettige oder verzweigte aliphatische, alicyclische, aromatische oder araliphatische Kohlenwasserstoffreste mit 1 - 8 Kohlenstoffatomen, bevorzugt $C_1$-$C_3$-Alkyl, besonders bevorzugt Vinyl,

$R^3$ Wasserstoff, Alkyl mit 1 - 4 Kohlenstoffatomen, Alkenyl mit 3 oder 4 Kohlenstoffatomen oder 2-Hydroxiethyl, bevorzugt Ethyl, besonders bevorzugt Methyl,

m Zahlen von 2 - 20, bevorzugt 2 - 6,

p Zahlen von 0 - 19, bevorzugt 0 oder von 1,5 bis 5,

bedeuten,

mit Ethylenoxid umsetzt.

Die so erhaltenen Phosphonsäureester entsprechen im wesentlichen der Formel II,

$$R^3\text{-}O\!\left(\overset{O}{\underset{R^1}{\overset{\|}{\underset{|}{P}}}}\text{-}O\text{-}CH_2\text{-}CH_2\text{-}O\right)_p\!\left(\overset{O}{\underset{R^2}{\overset{\|}{\underset{|}{P}}}}\text{-}O\text{-}CH_2\text{-}CH_2\text{-}O\right)_{m-p}\!\text{-}H \qquad \text{(II)},$$

wobei $R^4$ das gleiche wie $R^3$ außer Wasserstoff bedeutet.

Die Ausgangsverbindungen I werden nach speziellen, besonders einfachen Verfahren hergestellt, bei denen gesonderte Verfahrensstufen zur Bildung von reinen Phosphonsäuren, von reinen Phosphonsäureanhydriden oder von Phosphonsäure-anhydrid-Phosphonsäure-Addukten unnötig sind.

Ausgangsverbindungen Ia, bei denen p=o und $R^2$ = $CH_2$=CH- bedeuten, können nach einem Einstufenverfahren durch einfaches Erhitzen von Verbindungen der Formel III

$$R^3O\!\left(\overset{O}{\underset{CH=CH_2}{\overset{\|}{\underset{|}{P}}}}\ \text{-}\ O\right)_n\!\text{-}H \qquad \text{(III)} \quad \text{(mit n = 1 oder 2)}$$

erhalten werden. Dabei nehmen die Alkoxylgehalte ab. Die Substanzen III werden bei 180 - 250°C in Gegenwart saurer oder basischer Katalysatoren durch thermische Abspaltung von Alkylacetat aus 2-Acetoxiethanphosphonsäuredialkylester erhalten. Diese sind sehr einfach aus den preisgünstigen Ausgangsmaterialien Dimethylphosphit und Vinylacetat zugänglich.

Unter Abspaltung von Dialkyläthern, wie z.B. Dimethyläther (für $R^3$ = $CH_3$) oder Diäthyläther (für $R^3$ = $C_2H_5$) resultieren aus III bei weiterem Erhitzen, besonders in Gegenwart von Katalysatoren wie z.B. Hexamethyl-phosphorsäuretriamid höherkondensierte, alkylengruppenärmere Oligo-vinylphosphonsäure-Verbindungen der allgemeinen Formel IV

$$R^3O \left( \begin{array}{c} O \\ \| \\ P \\ | \\ CH{=}CH_2 \end{array} - O \right)_m H \qquad (IV),$$

wobei m  n ist und die oben genannte Bedeutung besitzt. Die Verbindungen IV sind als besonders leicht zugängliche spezielle Ausgangsmaterialien Ia besonders bevorzugt. Ausgangsverbindungen der Formel III mit p=0, worin die Vinylgruppe durch andere Gruppen unter der Bedeutung von $R^2$ ersetzt ist, können in hierzu analoger Weise hergestellt werden.

Die Ausgangsverbindungen Ib bei denen $p \geq 1$ ist, können nach einem Zweistufenverfahren erhalten werden durch Umsetzung von sauren Phosphonsäurederivaten der Formel V

$$R^3O \left( \begin{array}{c} O \\ \| \\ P \\ | \\ R^1 \end{array} - O \right)_n H \qquad (V),$$

worin n für 1 oder 2 steht, mit überschüssigem Ethylenoxid bei 80 - 150°C unter Entstehung neutraler Zwischenphosphonsäureester, die im wesentlichen der Formel VI entsprechen

$$R^3O \left( \begin{array}{c} O \\ \| \\ P \\ | \\ R^1 \end{array} - O - C_2H_4O \right)_n H \qquad (VI).$$

In vielen Fällen reicht es auch aus, wenn man die sauren Phosphonsäurederivate der Formel V mit einem Unterschuß an Ethylenoxid umsetzt. Man erhält dann Produkte, die gegenüber den Produkten der Formel V weniger sauer sind.

In beiden Fällen erhält man aus diesen sauren bzw. neutralen Oxethylaten beim nachfolgenden Erhitzen unter Abspaltung von Gemischen aus Methanol, Glykol, Dioxan, Dimethyläther und geringen Mengen anderer leichtsiedender Organo-Verbindungen bei Temperaturen von ca. 140 - 200°C die Ausgangsprodukte Ib ($p \geq 1$).

Als Phosphonsäure-Derivate der Formel V sind, wenn n = 1

ist, z.B. alle Phosphonsäuremonoalkylester der Formel Va

$$R^3O - \underset{R^1}{\overset{\overset{O}{\|}}{P}} - OH \qquad (Va)$$

geeignet. Als Verbindungen Va kommen z.B. in Betracht: n-Butan-, n-Hexan-, Cyclohexan-, n-Octan-, Phenyl-, Allyl- oder 1-Methyl-vinyl-phosphonsäure-mono-methyl, monoäthyl-, mono-n-propyl-, mono-isobutyl- oder mono-n-butylester, ferner Methan-, Ethan-, Propan- oder Vinyl-phosphonsäure-mono-iso-propyl-, n-propyl-, iso-butyl- oder n-butylester. Bevorzugt sind Methan-, Ethan- oder Propan-phosphonsäure-mono-methyl- oder -ethyl-ester. Besonders bevorzugt sind Vinyl-phosphonsäure-mono-methyl- oder ethyl-ester und auch für dieses Zweistufen-Verfahren zur Erhöhung des Kondensationsgrads die Vinylphosphonsäureester der oben angegebenen Formel III.

Anstelle der reinen Phosphonsäure-mono-alkylester der Formel Va, können auch Gemische aus 0,4 - 0,6 Mol, bevorzugt 0,5 Mol der Phosphonsäurediester der Formel VII

$$R^4 - O - \underset{R^1}{\overset{\overset{O}{\|}}{P}} - O - R^4 \qquad (VII)$$

und 0,6 - 0,4 Mol, bevorzugt 0,5 Mol der freien Phosphonsäuren der Formel VIII

$$HO - \underset{R^1}{\overset{\overset{O}{\|}}{P}} - OH \qquad (VIII),$$

die 1 - 10 Stunden, bevorzugt 2 - 6 Stunden, zum Zwecke der Isomerisierung auf 140 - 200°C, bevorzugt 150 - 180°C erhitzt wurden, eingesetzt werden. Auch sie enthalten als Hauptprodukt die Phosphonsäure-mono-ester der Formel Va.

Die Umsetzung der Phosphonsäurederivate der Formel I, sowohl Ia als auch Ib, mit Ethylenoxid kann durch Einleiten von überschüssigem Ethylenoxid bei Normaldruck

oder durch Einpressen von überschüssigem Ethylenoxid unter erhöhtem Druck durchgeführt werden. Bei kleineren Ansätzen ist die erste, bei größeren Ansätzen die zweite Form bevorzugt. Die Reaktionstemperaturen liegen bei 20 - 200°C, bevorzugt bei 50 - 150°C, besonders bevorzugt bei 70 - 130°C. Die Umsetzung ist beendet, wenn die Säurezahl, bestimmt in Methanol (= mg KOH pro Gramm), ca.<3 ist.

Die Zugabe von 0,01 % - 2 %, bevorzugt 0,1 - 1,0 %, an alkalischen Katalysatoren, wie z.B. Natriummethylat, Natriumhydroxid oder bevorzugt Soda, ist zweckmäßig, ist aber nicht immer notwendig. Das gleiche gilt für Polymerisationsinhibitoren, wie z.B. Hydrochinon, Hydrochinon-monomethyläther, 4-Methyl-2,6-di-t-butyl-phenol, Phenothiazin etc., in solchen Fällen, bei denen $R^1$ und/oder $R^2$ die Vinylgruppe bedeuten.

Neben den erwünschten neutralen oligomeren Phosphonsäureestern mit Hydroxyl-Endgruppen der Formel II können durch die Umsetzung der Verbindungen I mit Ethylenoxid in geringem Umfang unerwünschte 2-Hydrocarbyl-2-oxo-1,3-dioxa-2-phospholane der Formel IX

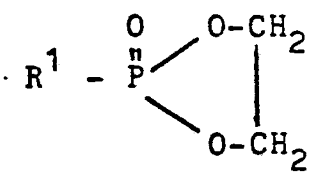

(IX)

auftreten. Sie sind hydrolytisch unbeständig und führen in wässriger Lösung unter Ringöffnung zu den sauren Phosphonsäure-mono-hydroxi-ethyl-estern der Formel X:

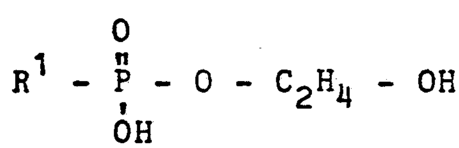

(X).

Sie wirken sich meist ungünstig bei der Anwendung der Reaktionsprodukte als Flammhemmittel aus. Durch ca. ein- bis achtstündiges Nacherhitzen der neutralisierten Reaktionsprodukte, gegebenenfalls nach Zugabe von 0,01 % - 2 %, bevorzugt 0,1 - 1 %, der vorne genannten alkalischen Katalysatoren auf Temperaturen von 60 - 140°C, bevorzugt 80 - 120°C, können diese Phospholane der Formel IX weitgehend beseitigt werden. Sie lagern sich dabei an die bereits vorhandenen endständigen alkoholischen Hydroxylgruppen der Oligomere der Formel II unter Addition eines weiteren neutralen Hydroxi-ethyl-phosphonsäure-ester Restes an.

Ein einfaches Maß für die Anwesenheit von Phospholanen der Formel IX, die auch im P-NMR-Spektrum gut erkennbar sind, ist z.B. die Differenz zwischen den nach 10 Minuten Stehen bei Raumtemperatur in Wasser ermittelten und den in Methanol bestimmten Säurezahlen. Besonders anwendungsgünstige Reaktionsprodukte werden erhalten, wenn auch die nach 10 Minuten Stehen in Wasser ermittelten Säurezahlen (titriert mit Phenolphthalein-Indikator und berechnet auf den ersten, meist nicht beständigen Indikator-Umschlag nach rot) ca. 1 - 3 sind. Daß die Reaktionsprodukte II höhere Kondensationsgrade aufweisen als z.B. die neutralen Zwischenphosphonsäureester VI also $m > n$ ist, geht z.B. aus dem niedrigeren Hydroxyl-Zahlen hervor.

Die Reaktionsprodukte II sind meist farblose bis gelb gefärbte mittelviskose Öle. Sie sind z.B. mit Wasser und polaren organischen Lösungsmitteln, wie z.B. Methanol, Äthanol, Isopropanol, Dioxan, Aceton, Tetrahydrofuran und Dimethylformamid in jedem Verhältnis mischbar. Von Bedeutung für ihre Vernetzbarkeit mit Hilfe von Aminoplastvorkondensaten sind die Hydroxylzahlen (in mg KOH pro Gramm Substanz). Sie sollen zweckmäßigerweise zwischen 30 und 260, bevorzugt 60 und 150 liegen. Reaktionsprodukte II mit hohen Phosphorgehalten von über ca. 14 % sind für einen Einsatz als Flammhemmittel, z.B. für textile Bodenbeläge, besonders geeignet.

Die besonders bevorzugten Endprodukte der vereinfachten Formel II Vi

$$HOC_2H_4-O\left(\underset{CH=CH_2}{\overset{\overset{O}{\|}}{P}}-O-C_2H_4-O\right)_m H \qquad \text{(II Vi)},$$

bei denen zumindest zu 60 % der Rest $R^1$ gleich $R^2$ und gleich dem Rest der Vinylphosphonsäure ($R^1=R^2 = CH_2=CH-$) ist, zeichnen sich durch ihre Polymerisationsfähigkeit bei Anwesenheit von Radikalspendern aus. Bei Anwesenheit von ca. 0,5 - 2 % an wasserlöslichen Polymerisationskatalysatoren, wie z.B. Kaliumperoxidisulfat, gegebenenfalls in Kombination mit Natrium-hypophosphit oder Natrium-pyrosulfit, resultieren nach dem Eindampfen bei ca. 80 - 130°C in emaillierten Blechpfannen von wässrigen Lösungen der Endprodukte II Vi unlösliche, schwerbrennbare elastische Filme.

Mit den neutralen oligomeren Phosphonsäureestern der Formel II werden auf den verschiedensten Fasermaterialien sehr gute flammhemmende Effekte erzielt.

Als textiles Fasergut kommen Fasern beziehungsweise textile Flächengebilde aus nativer oder regenerierter Cellulose, aus Synthesefasern oder deren Mischungen in Frage. Als synthetisches oder Mischfasergut eignen sich insbesondere non-woven-fabrics, z.B. Nadelvliese für Wand- und Bodenbeläge, z.B. Nadelvliese bestehend aus 100 % Polyamid-6-Fasern, aus Polyester-/Polyamid-6-Fasern 50/50 oder solchen, die einen Polyesterkern (Unterseite) mit einer Lauffläche aus Polyamid-6-Fasern, Polyamidfasern und Viskosezellwolle 50/50, Polyesterfaser mit Viskosezellwolle 50/50, Polyesterfasern 100 %ig, Polypropylenfasern 100 %ig oder Polypropylenfaser-Mischfasergut, z.B. Polypropylenfasern/Polyamid 70/30, 50/50, Polypropylenfasern/Polyester 50/50, Polypropylenfasern/Cellulosefasern, besitzen. Den Mischungsverhältnissen sind im allgemeinen keine engen Grenzen gesetzt. Weiterhin kommen Faservliese für Dämm- und Isolierzwecke, für Naß- und Trockenfilter, als Textiltapeten, textile Lamellen in Frage und auch textile Gebilde aus Glasfasern bzw. Glasfasermischungen mit Synthesefasern.

Die sehr gute Polymerisationsfähigkeit der leicht wasserlöslichen bzw. mit Wasser verdünnbaren oligomeren vinylgruppenhaltigen Verbindungen II Vi ermöglichen eine Polymerisation auch ohne Inertgasschutz und in Anwesenheit von Luftsauerstoff auf textilen Fasergebilden unter textiltechnischen Bedingungen in der Textilpraxis. Die so erhaltenen Polymerisate verleihen den verschiedensten und oben besonders aufgeführten textilen Flächengebilden einen sehr guten Flammschutz. Die hierfür erforderlichen Mengen betragen im allgemeinen 100 bis 500 Gew. Teile an Monomeren der Formel II Vi auf 1000 Gew.-Teile eines Textilsubstrates, vorzugsweise 80 bis 400 Gew.-Teile, insbesondere 150 bis 350 Gew.-Teile auf 100 Gew.-Teile Substrat.

Zur Verbesserung der Permanenz, besonders der Wasch- und Shampoonierbeständigkeit, ist es von besonderem Vorteil, den Monomeren der Formel II Vi weitere Comonomere zuzusetzen, besonders solche, die vernetzend wirken, z.B. Acrylamid, N-Methylolacrylamid, Methylenbisacrylamid, N-Methylolmethylenbisacrylamid, N,N'-Dimethylol-methylenbisacrylamid, N-Formamidomethyl-acrylamid, Divinylbenzole, Triallylcyanursäureester, Imide und Anhydride der Acrylsäure und Methacrylsäure, 1,3,5-Trisacryloyl-hexahydro-1,3,5-triazin. Als Polymerisationskatalysatoren werden in den wäßrigen Ausrüstungsflotten die verschiedensten Radikaltstarter verwendet, z.B. Kalium- oder Ammoniumperoxidisulfat, Wasserstoffperoxid oder Wasserstoffperoxidspender wie $NH_4P_2O_7 \cdot H_2O_2 \cdot H_2O$, oder $(NH_2CONH_2) \cdot H_2O_2$ (auch als Carbamid-Wasserstoffperoxid bezeichnet), ferner auch Redoxkatalysator-Systeme, wie Kaliumperoxiddisulfat + Natriumpyrosulfit, Kaliumperoxidisulfat + Natriumhypophosphit, Mangan(II)chlorid oder Eisen(II)chlorid. Die Menge dieser Radikalspender liegt üblicherweise bei ca. 0,1 - 3 Gew.-%, bevorzugt 0,2 - 1,5 Gew.-%, bezoge auf das Monomere.

Bei der Auswahl und Dosierung der Katalysatoren muß darauf geachtet werden, daß eine ausreichende Flottenstabilität

bei Raumtemperatur, d.h. bei der Behandlung des Textilsubstrates mit der Ausrüstungsflotte, erhalten bleibt.

Bei den Verbindungen der Formel II Vi kann noch durch weitere bzw. zusätzliche Vernetzungssysteme die Permanenz verbessert oder der Warengriff verändert werden, z.B. indem die endständigen Hydroxylgruppen durch N-Methylolverbindungen im Beisein von Säurespendern vernetzt werden. Es ist somit möglich, die Vernetzung über die Vinylgruppe als auch und zusätzlich über die endständigen Hydroxylgruppen durchzuführen.

Der Anteil der Verbindungen der Formel II Vi, der durch die radikalische Polymerisation allein nicht unlöslich wird, kann durch die Umsetzung der endständigen Hydroxylgruppen der Verbindungen II Vi mit mehrwetigen N-Methylolverbindungen XI permanent auf dem Fasergut fixiert werden. Als derartige Vernetzungskomponenten XI kommen Derivate von 2,4,6-Triamino-1,3,5-triazinen, wie Trimethylolmelamin, Hexamethylolmelamin, Trimethylolmelamin-trimethylether, Hexamethylolmelamin-pentamethylether, ferner Derivate des Harnstoffes, wie Dimethylolharnstoff, Dimethylolharnstoffdimethylether, Dimethylolcycloethylenharnstoff, Dimethylolcyclopropylenharnstoff, Dimethylolcarbamate etc. in Frage.

Insgesamt können diese Zusätze zu den polymerisierbaren Verbindungen der Formel II Vi 10 bis 300 Gewichtsteile, vorzugsweise 30 - 80 Gewichtsteile, insbesondere 30 - 150 Gewichtsteile auf 1000 Gewichtsteile Substrat betragen.

Als zusätzliche Vernetzungskatalysatoren von N-Methylolverbindungen kommen die in der Hochveredlung üblichen anorganischen oder organischen Säuren oder deren Salze, wie z.B. Ammoniumchlorid oder Zinkchlorid, in Frage. Werden als Radikalstarter Ammonium- oder Kaliumpersulfat verwendet, so erübrigt sich im allgemeinen ein weiterer Zusatz an sauren Katalysatoren.

Die radikalisch geführte Polymerisation erfolgt während des Trocknungs- bzw. Kondensationsprozesses oberhalb von etwa 80°C bis etwa 180°C, vorzugsweise bei 100 - 140°C. Werden zur Vernetzung noch weitere Kunstharzvorkondensate oder nur Kunstharzvorkondensate zugesetzt, so ist es zweckmäßig, die Trocknungstemperatur auf 140 - 150°C zu erhöhen. Textilgut aus Polypropylenfasern oder aus Polypropylenmischfasern werden vorzugsweise bei 120 - 140°C getrocknet. Ein Zweistufenverfahren zur Vernetzung der besonders bevorzugten Verbindungen der Formel II Vi kann ebenfalls durchgeführt werden. Man kann es gegebenenfalls dann wählen, wenn außer einer radikalischen Vernetzung ein zusätzlicher zweiter Vernetzungsprozeß mit härtbaren Kunstharzvorkondensaten durchgeführt werden soll.

Die neutralen oligomeren Verbindungen der Formel II, die am Phosphor keine radikalisch polymerisierbare Vinylgruppen tragen, können in der bereits oben geschilderten Weise allein durch die bereits oben genannten mehrwertigen N-Methylol-Verbindungen XI bei Gegenwart von sauren Katalysatoren auf den flammhemmend auszurüstendem Fasermaterial fixiert werden.

Als Vernetzer ist in diesem Fall z.B. der relativ schnell reagierende Trimethylolmelamintrimethyläther besonders bevorzugt.

Die Wärmebehandlungen dauern bei allen Flammhemmausrüstungen durchschnittlich 5 bis etwa 60, vorzugsweise 10 bis 30 Minuten. Die Wärmeeinwirkungen erfolgen in Trockenkammern, auf Spannrahmen, Hotflues bzw. Kondensationsrahmen oder Siebtrommeltrocknern.

Allen Ausrüstungsflotten können weitere Verdünnungsmittel wie textile Weichmacher, Hydrophobierungsprodukte, Oleophobierungsmittel, Antistatika oder auch antimikrobielle Ausrüstungsprodukte zugesetzt werden.

Zur Griffgestaltung, zur Erzielung einer guten Formbeständikeit, zur Verbesserung des Abriebs und der Trittfestigkeit von Nadelfilzauslegewaren können den Ausrüstungsflotten hochpolymere Kunststoffe zugesetzt werden, z.B. auf Basis Polyvinylacetat, Vinylacetat/Ethylen-Mischpolymere, Polyvinylacetat mit Kunststoffweichmacher, wie Dibutylphthalat, Mischpolymerisate von Vinylacetat mit Maleinsäure-dibutylester, Mischpolymerisate von Acrylsäurebutylester mit N-Methylolacrylamid, Mischpolymerisate von Acrylsäurebutylester, N-Methylolacrylamid und Acrylsäure, Mischpolymerisate von Acrylsäurebutylester, N-Methylolacrylamid und N-Methylolmethacrylamid, Mischpolymerisate von Acrylsäurebutylester, Acrylnitril, N-Methylolacrylamid und Methacrylsäure, Mischpolymerisate von Acrylsäurebutylester, Styrol, Acrylnitril und N-Methylolmethacrylamid, bzw. N-Methylolmethacrylamid, Mischpolymerisate aus Acrylsäuremethylester und Acrylsäurebutylester, Mischpolymerisate von Ethylacrylat, Acrylnitril und N-Methylolacrylamid, Mischpolymerisate von Butylacrylat, Vinylacetat mit N-Methylolamid, Mischpolymerisate von Butylacrylat, Acrylnitril und Methylolacrylamid, Mischpolymerisate von Styrol, Butylacrylat und Acrylsäure, Naturlatex oder Syntheselatices aus Styrol mit Butadien.

Die folgenden Herstellungs- und Anwendungsbeispiele sollen das Wesen der Erfindung erläutern, ohne sie zu beschränken.

Beispiel 1:

Herstellung des sauren Ausgangsprodukts (Ib/1):

244 g (2 Mol) Vinylphosphonsäure-monomethylester

0,5 g des Stabilisators

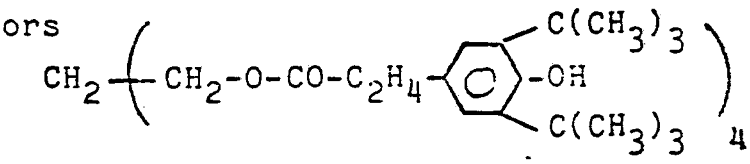,

0,5 g 4-Hydroxy-anisol und 0,5 g Soda werden vermischt. Bei 110° - 120°C werden innerhalb von 9 Std. 109,5 g (2,49 Mol) Ethylenoxid eingeleitet bis die Säure-Zahl 1,4 erreicht ist. Es resultieren 354 g eines farblosen neutralen Zwischenphosphonsäureesters (VI/1), der eine Hydroxyl-Zahl von 365 eine Jod-Zahl von 133 und einem P-Gehalt von 17,5 % aufweist. Davon werden 342 g (1,93 P-Äquivalente) 3 Stunden auf 190°C erhitzt. Dabei werden 57 g eines Gemisches aus 35,2 % Methanol, 8,1 % Dimethyläther, 12,2 % Glykol, 39,8 % Dioxan und anderen Leichtsiedern in einer Destillationsvorlage und einer Kältefalle aufgefangen. Es hinterbleiben 278 g eines sauren Öls von der Säurezahl 246, der Hydroxyl-Zahl 0 und der Jod-Zahl 162.

Herstellung des neutralen oligomeren Vinylphosphonsäureesters II Vi/1):

In 264 g (1,77 P-Äquivalente des Ausgangsproduktes Ib/1) werden bei 110 - 110°C 46 g (1,04 Mol) Ethylenoxid eingeleitet bis die Säure-Zahl in Wasser nach 10 Minuten Stehen bei Raumtemperatur 2,0 beträgt. Es resultieren 324 g eines schwach gelblich neutralen Öls (II Vi/1) von der Hydroxyl-Zahl 192, der Jod-Zahl 133 und vom Phosphor-Gehalt 16,9 %. Werden 50 g dieses Öls (II Vi/1) mit 49 g Wasser, 1 g Kaliumpersulfat und 0,2 Natrium-hypophosphit 1 Stunde lang in einem nach außen geöffneten Umluft-Trockenschrank in einer emaillierten Blechwanne 1 Stunde lang auf 120°C erhitzt, so resultiert ein vernetzter, in Wasser unlöslicher Film. Bei der Verwendung des Zwischenoxethylats (VI/1) wird kein Film erhalten.

<u>Beispiel 2</u>:

Herstellung des sauren Ausgangsprodukts (Ib/2):

Als Grundsubstanz dient ein Gemisch, das überwiegend aus Vinylphosphonsäurederivaten der Formel

$$CH_3 - O - \left( \overset{\overset{O}{\|}}{\underset{\underset{CH=CH_2}{|}}{P}} - O \right)_{n} - H \qquad n=1 \text{ und } 2 \qquad (III/2)$$

besteht. Es wird wie folgt hergestellt:

1180 g 2-Acetoxiethanphosphonsäuredimethylester und 20 g Vinylphosphonsäure werden unter Stickstoff auf 210 bis 220°C unter Rühren erhitzt. Innerhalb 9 Std. destillieren 476 g Methylacetat ab, die 1 % Methanol und 4,6 % Dimethylether enthalten. In einer der Apparatur nachgeschalteten Kühlfalle sammeln sich weitere 33 g niedrig siedende Produkte, die im wesentlichen aus Dimethylether bestehen. Im Rückstand hinterbleiben 685 g eines Reaktionsprodukts, das in diesem Beispiel als Grundsubstanz eingesetzt wird. 374 g (3,46 P-Äquivalente) dieser Grundsubstanz werden zusammen mit 679 g (3,46 Mol) 2-Acetoxiethan-phosphonsäure-dimethylester werden in leichtem Stickstoffstrom 8 Stunden auf 190 - 195°C erhitzt. Dabei destillieren 253 g (3,25 Mol) Methylacetat ab.

Es hinterbleiben 766 g eines schwach gelb gefärbten Öls von der Säurezahl 421, der Jod-Zahl 142, dem Methoxylgehalt 18,3 % und dem Phosphorgehalt 28,0 %.

In 756 g (6,83 P-Äquivalente) dieser Grundsubstanz (III/2) werden nach Zugabe von 1 g Soda und 2 g des Stabilisators aus Beispiel 1 bei 70° - 115°C innerhalb von 12 Stunden 431 g (9,78 Mol) Ethylenoxid eingeleitet. Dabei resultieren 1178 g eines neutralen Öls (VI/2) von der Säure-Zahl 1, der Hydroxyl-Zahl 268 und der Jod-Zahl 89.

Davon werden 1174 g (6,75 P-Äquivalente) 7 1/2 Stunden auf 185 - 190°C in schwachem Stickstoffstrom erhitzt. Dabei destillieren 158 g an flüchtigen Substanzen ab. Darunter sind gemäß Gas-Chromatogramm 60,5 g Methanol, 59,0 g Dioxan, 20,5 g Glykol und 15,8 g Dimethyläther. Nach Anlegen eines Vakuums von 40 mbar werden in einer Kühl-

falle noch 21,9 g Dioxan gefunden. Es hinterbleiben 976 g eines gelben sauren Öls (Ib/2) mit der Säure-Zahl 220, der Hydroxyl-Zahl 8 und der Jod-Zahl 111.

Herstellung des neutralen oligomeren Vinylphosphonsäureesters (II Vi/2):

976 g (6,69 P-Äquivalente) des Ausgangsprodukts (Ib/2) werden innerhalb von 6 Stunden bei 100 - 110°C mit 222 g (4,93 Mol) Ethylenoxid behandelt. Dabei sinken die Säure-Zahlen in Methanol und Wasser auf 1,0 bzw. auf 3,0. Nach 10 Minuten Anlegen eines Vakuums von 40 mbar hinterbleiben 1189 g eines gelben Öls (II Vi/2) von der Hydroxyl-Zahl 200, der Jod-Zahl 94 und dem Phosphor-Gehalt 17,4 %.

Auch aus dem Endprodukt (II Vi/2) ist, wie in Beispiel 1 beschrieben, ein trockner unlöslicher Film herstellbar. Das neutrale Zwischen -Oxethylat (VI/2) hingegen bleibt nach gleicher Behandlung überwiegend flüssig.

Beispiel 3:

Herstellung des sauren Ausgangsprodukts (Ib/3):

Als Grundsubstanz dient ein Gemisch von Verbindungen der Formel (III/3)

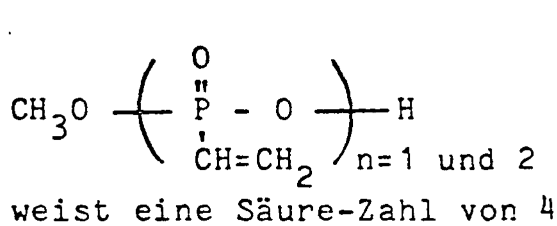

(III/3).

Es weist eine Säure-Zahl von 409, eine Jod-Zahl von 147, einen Methoxylgehalt von 20,3 % und einen Phosphor-Gehalt von 27,2 % auf. Es wird analog der Grundsubstanz des Beispiel 2 hergestellt. Statt 8 Stunden wird nur 7 $\frac{1}{2}$ Stunden erhitzt.

In 1470 g (12,9 Phosphor-Äquivalente) dieser Grundsubstanz (III/3) werden bei 90 - 110°C innerhalb von 19 Stunden 743 g (16,84 Mol) Ethylenoxid eingeleitet. Dabei sinkt die Säure-Zahl auf 1,4 ab. Ausbeute = 2219 g. Die Hydroxyl-Zahl des erhaltenen neutralen Zwischenoxethylats (VI/3) liegt bei 257, die Jod-Zahl bei 97.

Davon werden 2204 g (12,85 P-Äquivalente) 2 1/2 Stunden auf 190°C erhitzt. Anschließend wird bei 120°C 3 Stunden ein Vakuum von 40 mbar angelegt. Es hinterbleiben 1979 g eines sauren Öls (Ib/3) von der Hydroxyl-Zahl 103 und der Jod-Zahl 111. Im Destillat und in der Kältefalle finden sich u.a. 104 g Methanol, 36,5 g Glykol und 19,8 g Dioxan.

Herstellung des neutralen oligomeren Phosphonsäureesters (II Vi/3):

In 1971 g (12,8 P-Äquivalente) der Stufe 2 werden bei 80 - 105°C innerhalb von 6 Stunden 183 g (4,15 Mol) Ethylenoxid eingeleitet. Es resultieren 2145 g eines gelblichen praktisch neutralen Öls (II Vi/3) von der Säure-Zahl (in Wasser) 3,0, der Hydroxyl-Zahl 177, der Jod-Zahl 104 und dem Phosphor-Gehalt 18,4 %.

Bei der Filmherstellung analog Beispiel 1 ergibt das neutrale Endprodukt (II/3) trockene vernetzte Filme. Das neutrale Zwischenprodukt (VI/3) hingegen bleibt überwiegend schmierig und unvernetzt.

<u>Beispiel 4</u>:

Herstellung des sauren Ausgangsprodukts (Ib/4):

921,8 g (6 Mol) Propanphosphonsäuredimethylester und 744,5 g (6 Mol) Propanphosphonsäure werden 6 Stunden auf 150 - 160°C erhitzt. Durch eine Isomerisierungsreaktion

entsteht gemäß $^{1}H$- und $^{31}P$-Kern-Resonanz-Spektrum ein Gemisch aus 59 % Propanphosphonsäuremonomethylester, 22 % Propanphosphonsäure, 15 % Propanphosphonsäuredimethylester und 4 % anderen P-haltigen Substanzen.

In 552 g (= 4 Phosphor-Äquivalente) dieser Grundsubstanz werden nach Zugabe von 1 g Soda bei 120°C 231 g (5,24 Mol) Ethylenoxid eingeleitet. Dabei sinkt die Säurezahl (in Methanol gemessen) auf 1,1 ab. Ausbeute = 782 g. Die Hydroxyl-Zahl des erhaltenen neutralen Öls (VI/4) liegt bei 279, der Phosphor-Gehalt bei 15,9 %.

Davon werden 772 g (= 3,96 Phosphor-Äquivalente) 6 Stunden mit absteigendem Kühler auf 190 - 195°C erhitzt. Dabei nimmt der Kolbeninhalt um 146 g ab.

In der Destillationsvorlage werden 128 g eines Gemischs an flüchtigen Verbindungen gefunden, das gemäß Gaschromatogramm 70,8 g (1,11 Mol) Methanol, 20,5 g (0,33 Mol) Äthylenglykol, 32 g (0,36 Mol) Dioxan und 4,7 g an anderen nicht identifizierten Substanzen enthält.

Es hinterbleiben 628 g eines farblosen sauren Öls (Ib/4) von der Säurezahl 155, der Hydroxyl-Zahl 18 und dem Phosphorgehalt 19,5 %.

Herstellung des neutralen oligomeren Phosphonsäureesters (II/4):

Zu 616 g (3.87 Phosphor-Äquivalente) des sauren Öls (Ib/4) werden bei 100 - 130°C innerhalb von 3 Stunden 93 g (2,11 Mol) Ethylenoxid eingeleitet und 30 Minuten das gelöste Ethylenoxid mit Stickstoff ausgeblasen. Es hinterbleiben 709 g eines neutralen farblosen Öls (II/4) von den Säurezahlen 1,7 (gemessen in Methanol) und 2,2 (gemessen nach 10 Minuten Stehen in Wasser). Die Hydroxylzahl liegt bei 201, der Phosphor-Gehalt bei 17;0 %.

Beispiel 5:

Herstellung des sauren Ausgangsprodukts (Ib/5):

328,3 g (2 Mol) Vinylphosphonsäure-diäthylester, 216,1 g (2 Mol) Vinylphosphonsäure und 0,5 g des Stabilisators aus Beispiel 1 werden unter Rückfluß 6 Stunden auf 160°C erhitzt. Es resultieren 544 g eines gelben Öls.

Davon werden 539 g (3,95 P-Äquivalente) bei 100 - 120°C mit 237 g (5,38 Mol) Ethylenoxid umgesetzt. 707 g 3,6 P-Äquivalente der sich ergebenden 776 g eines neutralen Zwischenoxethylats (VI/5) werden 8 Stunden auf 188 - 190°C erhitzt. Dabei destillieren insgesamt 134 g ab. Gemäß Gaschromatogramm besteht das Destillat aus 42,3 % Ethanol, 28,8 % Dioxan und 9,4 % Glykol. Es hinterbleiben 573 g des gesamten Ausgangsprodukts (Ib/5) mit der Säure-Zahl 202, der Jod-Zahl 183 und der Hydroxyl-Zahl 0 und dem P-Gehalt 19,4 %.

Herstellung des neutralen oligomeren Phosphonsäureesters (II Vi/6):

In 561 g (3,5 P-Äquivalente) des Ausgangsprodukts (Ib/5) werden nach Zugabe von 1 g Soda bei 110°C 103 g (2,34 Mol) Ethylenoxid 5 Stunden lang eingeleitet. Dabei fällt die Säure-Zahl, gemessen nach 10 Minuten Stehen in Wasser, auf 2,9 ab. Nach 20 Minuten eines Vakuums bei 110°C hinterbleiben 664 g eines neutralen gelben Öls (II/6) mit der Hydroxyl-Zahl 186, der Jod-Zahl 120 und dem P-Gehalt 16,2 %.

Nach der im Beispiel 1 beschriebenen Methode wird ein trockener, auf der Unterlage (V4A-Blech) sehr haftfester Film erhalten.

Beispiel 6:

Herstellung des sauren Ausgangsprodukts (Ia/6):

Als Grundsubstanz dient ein Gemisch, das überwiegend aus Vinylphosphonsäurederivaten der Formel

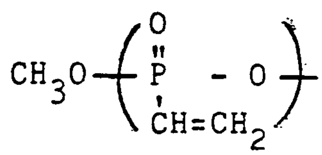

(Va /2)

n = 1 und 2

besteht. Es wird wie folgt hergestellt:

1765,3 g (9 Mol) 2-Acetoxiethanphosphorsäure-tdimethylester und 8,8 g Hexamethylphosphorsäure-triamid werden 6 Stunden auf 220 - 230°C erhitzt. Dabei destilliert ein Gemisch an Leichtsiedern ab, das im wesentlichen aus Methylacetat und Dimethyläther besteht. Es hinterbleiben 828 g eines hellgelben öligen Rückstands, der eine Jod-Zahl von 139, einen Methoxygehalt von 12,1 % und einen Phosphor-Gehalt von 29,2 % aufweist.

389 g (387 P-Äquivalente) dieser Grundsubstanz, 829 g (4,23 Mol) 2-Acetoxiethanphosphonsäure-dimethylester, 8,3 g Hexamethyl-phosphorsäure-triamid und 0,9 g des Stabilisators von Beispiel 1 werden 9 Stunden auf 190 - 195°C erhitzt. Dabei destillieren insgesamt 342,7 g ab. Davon sind 313 g Methylacetat. Der Rest von 29,7 g sind andere Leichtsieder, wie z.B. Dimethyläther. Es hinterbleiben 885 g eines gelblichen viskosen Öls von der Säure-Zahl 435, der Jod-Zahl 133, dem P-Gehalt 28,5 % und dem Methoxyl-Gehalt von 15 %.

Herstellung des neutralen oligomeren Phosphonsäureesters (II Vi/6):

In 313,8 g (3 P-Äquivalente) des Ausgangsprodukts (IA/6) werden nach Zugabe von 2 g wasserfreier Soda bei 90 - 115°C

in 3 Stunden 173,2 g (3,8 Mol) Ethylenoxid eingeleitet. Dabei sinkt die Säure-Zahl gemessen in Wasser (nach 10 Minuten Stehen) auf 1,6 ab. Es resultieren 489 g eines neutralen gelben Öls (II Vi/6) von der Hydroxyl-Zahl 202, der Jod-Zahl 88 und dem P-Gehalt 18,3 %.

Durch radikalische Vernetzung (analog Beispiel 1) resultiert ein elastischer unlöslicher vernetzter Film.

Beispiel 7:

Eine grobfädige Nadelvliesauslegeware, die für Wohnräume, Hotels, Schulen, Büroräume verwendet wird, bestehend aus einem Polyesterfaserkern und aus einer Polyamidlauffläche im Mischungsverhältnis 65:35 mit einem Quadratmetergewicht von ca. 780 - 800 $g/m^2$, wird auf einem Zweiwalzenfoulard mit einer wäßrigen Lösung folgender Zusammensetzung behandelt:

270 g/l des Endprodukts aus Beispiel 1 (P = 16,9 %)
120 g/l N-Methylolacrylamid 60 %
400 g/l einer 50 %-igen Polymerdispersion, bestehend aus einem Mischpolymerisat Vinylacetat/Ethylen (84/16)
5 g/l Kaliumperoxidisulfat.

Der Abquetscheffekt beträgt ca. 105 %. Anschließend wird 25 Min. bei 145°C getrocknet.

Die Nadelvliesauslegeware zeigt einen guten permanenten flammhemmenden Effekt, der mehrere Feinwäschen bei 50°C und mehrere Shampoonierungen überdauert.

Die flammhemmende Prüfung erfolgt nach DIN 54 333 (Bestimmung der Flammausbreitungsgeschwindigkeit von Textilien).

Ein Prüfling, ausgerüstet mit 400 g/l der oben genannten Polymerdispersion , brennt nach Wegnahme der Flamme weiter und durchläuft eine Teilzeitstrecke von 10 cm mit einer Brennzeit von 2 Minuten und 35 Sekunden. Der flammhemmend ausgerüstete Prüfling brennt dagegen nach Wegnahme der Prüfflamme nicht weiter. Nach 3 Shampoonierungen wird eine Nachbrennzeit von 15 Sekunden festgestellt; nach 15 Sekunden ist die Flamme erloschen.

Der Nadelfilz mit der flammhemmenden Ausrüstung zeigt eine sehr gute Formstabilität. Die Elastizität des so ausgerüsteten Nadelfilzes ist ebenfalls sehr gut.

Beispiel 8:

Mit der nachstehenden wäßrigen Imprägnierflotte wird auf einem Zweiwalzenfoulard ein 900 $g/m^2$ schwerer Nadelfilz aus 70 % Polypropylenfaser und 30 % Polyamidfasern imprägniert. Der Abquetscheffekt beträgt ca. 98 %. Die Trocknung erfolgt 25 Minuten bei 128° - 130°C.

Die Imprägnierlösung enthält

| | |
|---|---|
| 280 | g/l des Endprodukts aus Beispiel 3 ( P = 18,4 %) |
| 60 | g/l N-Methylolacrylamid (100 %-ig) |
| 400 | g/l einer 50 %-igen Polymerdispersion (Butadien/ Styrol (60/40) |
| 5 | g/l Kaliumperoxidisulfat |
| 2,5 | g/l Na-hypophosphit |

Der ausgerüstete Nadelfilz aus Polypropylenfaser 70 % mit 30 % Polyamidfasern zeigt ausgezeichnete permanente flammhemmende Eigenschaften.

Der Griffausfall ist elastisch und nicht verhärtet. Der Nadelfilz zeigt eine sehr gute Formstabilität und läßt sich leicht ein- und aufrollen.

Die flammhemmende Prüfung erfolgt wie im Beispiel 1 beschrieben. Ein Prüfling, imprägniert mit 400 g/l der 50 %-igen Polymerdispersion (Butadien/Styrol 60/40) brennt nach Wegnahme der Flamme mit einer starken Flammenfront weiter und durchläuft eine Prüfstrecke von 10 cm in 2 Minuten und 35 Sekunden.

Der flammhemmend ausgerüstete Prüfling brennt dagegen nach Wegnahme der Prüfflamme nur 40 Sekunden nach. Nach 3 Shampoonierungen wird eine Nachbrennzeit von 120 Sekuden gemessen.

Beispiel 9:

Eine Nadelvliesauslegeware aus 100 % Polypropylenfasern mit einem Quadratmetergewicht von 750 $g/m^2$ wird auf einem Zweiwalzenfoulard mit einer wäßrigen Impägnierflotte behandelt, die

290 g/l des Endprodukts aus Beispiel 2 (P = 17,4 %)
120 g/l N-Methylolacrylamid
400 g/l einer 50 %-igen Butadien/Styrol-Polymerdispersion (60/40)
4 g/l Kaliumperoxidisulfat
2,5 g/l Na-hypophosphit

enthält. Der Abquetscheffekt beträgt ca. 105 %, getrocknet wird 30 Minuten bei 130°C.

Der Nadelfilz zeigt einen guten permanenten Flammschutzeffekt. Der Warengriff ist voll und elastisch.

Die Flammschutzprüfung erfolgt nach DIN 54 332 und 54 333.

DIN 54 332

Anfangseffekt: Nach Wegnahme der Prüfflamme brennt der Nadelfilz nicht nach.

2 Feinwäschen: Nach Wegnahme der Prüfflamme brennt der Nadelfilz 5 Sekunden nach; die Flamme erlischt dann sofort.

DIN 54 333

Anfangseffekt: Brennt nach Wegnahme der Prüfflamme 10 Sek. nach und brennt nicht in die Prüfstrecke ein.

3 Shampoonierungen: Der Nadelfilz brennt 50 Sek. nach, ohne die Prüfstrecke zu berühren.

Ähnlich gute flammhemmende Effekte werden erhalten, wenn bei der Rezepteinstellung die N-Methylolacrylamidmenge auf 40 g/l reduziert wird und zur Imprägnierlösung 50 g/l Trimethylolmelamintrimethylether zugegeben werden.

Es werden ebenfalls sehr gute flammhemmende permanente Effekte erzielt. Der Warengriff ist etwas voller, aber nicht verhärtet.

Beispiel 10:

Die Nadelvliesauslegeware, die im Beispiel 7 beschrieben ist, wird mit folgender Imprägnierlösung auf einem Zweiwalzenfoulard behandelt. Der Abquetscheffekt beträgt ca. 100 %. Die Trocknung erfolgt 35 Minuten bei 145°C.

Imprägnierlösung:

270 g/l des Endprodukts aus Beispiel 1
120 g/l N-Methylolacrylamid
400 g/l einer 50 %-igen Polymerdispersion Butylacrylat/Acrylnitril/N-Methylolacrylamid (50:25:25)
5 g/l Kaliumperoxidisulfat

Der so ausgerüstete Nadelfilz zeigt eine sehr gute Formstabilität. Die flammhemmende Prüfung erfolgt nach der Kraftfahrzeugsicherheitsnorm No. 302 (US-MVSS 302).

Nach Wegnahme der Prüfflamme brennt der Nadelfilzprüfling 35 Sek. nach. Nach 3 Shampoonierungen wird ein Nachbrennen von 50 Sek. festgestellt. Der Nadelfilz brennt nicht in die Prüfstrecke ein.

Zu ähnlich guten flammhemmenden Effekten gelangt man, wenn man als Katalysatoren 1 g/l Kaliumpersulfat + 20 g/l Carbamid-Wasserstoffperoxid einsetzt.

<u>Beispiel 11</u>:

Die im Beispiel 7 beschriebene Nadelfilzauslegeware, bestehend aus Polyester- und Polyamidfasern im Mischungsverhältnis 65:35 wird mit folgender Imprägnierlösung auf einem Zweiwalzenfoulard behandelt:

300 g/l des Endproduktes aus Beispiel 4
150 g/l Trimethylolmelamintrimethylether
400 g/l einer 50 %-igen Polymerdispersion Butadien/Styrol 60:40
5 g/l $NH_4Cl$

Der Abquetscheffekt beträgt ca. 105 %. Getrocknet wird 25 Minuten bei 150°C.

Der so behandelte Nadelfilz zeigt sehr gute permanente flammhemmende Eigenschaften. Der Warengriff ist voll und elastisch. Der Nadelfilz läßt sich gut auf- und abrollen.

Die flammhemmende Prüfung erfolgt nach Din 54 333.

| | |
|---|---|
| Anfangseffekt: | brennt nicht nach |
| 1 Feinwäsche bei 45°C: | brennt 50 Sek. nach |
| 3 Shampoonierungen: | brennt 1 Min.-20 Sek. nach. |

Beispiel 12:

Eine Tuftedteppichware mit einem Quadratmetergewicht von 600 $g/m^2$, die aus einem Polyamidflor, 6 mm hoch, besteht, getufted auf einem Trägermaterial aus vernadeltem Polypropylenvlies, wird mit einem Vorstrich folgender Zusammensetzung versehen:

300 Teile des Endprodukts aus Beispiel 3
60 Teile N-Methylolacrylamid 100 %
400 Teile Butadien/Styrol Polymerdispersion 50 % (60:40)
350 Teile einer 3,5 %-igen Methyl-hydroxi-ethylcelluloselösung
5 Teile Kaliumperoxidisulfat
200 Teile Kreide.

Der Vorstrich wird mit Hilfe einer Gummirakel aufgebracht und 20 Minuten bei 140oC getrocknet. Die Trockenauflage beträgt 870 $g/m^2$.

Der so behandelte Tuftedteppich zeigt einen flexiblen Griff, die Imprägnierlösung ist nicht in die Florfäden eingedrungen. Der Flor zeigt seine ursprüngliche Beweglichkeit. Die Florfäden sind im Grundgewebe sehr gut verfestigt.

Der so ausgerüstete Tuftedteppich zeigt sehr gute flammhemmende Eigenschaften, die auch noch nach mehreren Shampoonierungen erhalten bleiben. Nach DIN 54 332 brennt der Teppich nach Wegnahme der Flamme nicht weiter.

Beispiel 13:

Die im Beispiel 7 beschriebene Nadelvliesauslegeware wird auf einem Zweiwalzenfoulard mit folgender Ausrüstungsflotte

behandelt:

260 g/l des Endprodukts aus Beispiel 6
120 g/l N-Methylolacrylamid
400 g/l einer 50 %-igen Polymerdispersion Butadien/Styrol (60/40)
5 g/l Kaliumperoxidisulfat

Der Abquetscheffekt beträgt ca. 100 %. Die Trocknung erfolgt 20 Minuten bei 145°C.

Der so imprägnierte Nadelfilz zeigt ausgezeichnete permanente flammhemmende Eigenschaften.

Die flammhemmende Prüfung erfolgt nach DIN 54 333 (Bestimmung der Flammausbreitungsgeschwindigkeit von Textilien).

Nach Wegnahme der Prüfflamme brennt der Prüfling nicht weiter, die Flamme erlischt nach 2 Sekunden. Nach 3 Shampoonierungen zeigt der Prüfling eine Nachbrennzeit von 35 Sekunden, ohne die eigentliche Prüfstrecke zu erreichen.

Der Nadelfilz zeigt eine sehr gute Formstabilität mit sehr guten elastischen Eigenschaften.

Patentansprüche:

1. Oligomere Phosphonsäureester, dadurch gekennzeichnet, daß sie erhalten werden durch Umsetzung von sauren Phosphonsäurederivaten der Formel I

$$R^3\text{-}O\left(\begin{matrix}O\\ \| \\ P\\ | \\ R^1\end{matrix} - O - CH_2 - CH_2 - O\right)_p \left(\begin{matrix}O\\ \| \\ P\\ | \\ R^2\end{matrix} - O\right)_{m-p} H \quad (I),$$

worin $R^1$ und $R^2$ gleiche oder verschiedene gesättigte oder ungesättigte geradkettige oder verzweigte aliphatische, alicyclische, aromatische oder araliphatische Kohlenwasserstoffreste mit 1 - 8 Kohlenstoffatomen, bevorzugt $C_1$-$C_3$-Alkyl, besonders bevorzugt Vinyl,
$R^3$ Wasserstoff, Alkyl mit 1 - 4 Kohlenstoffatomen, Alkenyl mit 3 oder 4 Kohlenstoffatomen oder 2-Hydroxiethyl, bevorzugt Ethyl, besonders bevorzugt Methyl,
m Zahlen von 2 - 20, bevorzugt 2 - 6,
p Zahlen von 0 - 19, bevorzugt 0 oder von 1,5 bis 5,
bedeuten,
mit Ethylenoxid.

2. Verwendung der oligomeren Phosphonsäureester nach Anspruch 1 als Flammhemmittel.

0035162
HOE 80/F 036

Patentansprüche Österreich:

1. Verfahren zur Herstellung von oligomeren Phosphonsäureestern, dadurch gekennzeichnet, daß man saure Phosphonsäurederivate der Formel I

$$R^3-O\left(\overset{\displaystyle O}{\overset{\|}{\underset{\underset{\displaystyle R^1}{|}}{P}}}-O-CH_2-CH_2-O\right)_p\left(\overset{\displaystyle O}{\overset{\|}{\underset{\underset{\displaystyle R^2}{|}}{P}}}-O\right)_{m-p}H \quad (I),$$

worin $R^1$ und $R^2$ gleiche oder verschiedene gesättigte oder ungesättigte geradkettige oder verzweigte aliphatische, alicyclische, aromatische oder araliphatische Kohlenwasserstoffreste mit 1 - 8 Kohlenstoffatomen, bevorzugt $C_1$-$C_3$-Alkyl. besonders bevorzugt Vinyl, $R^3$ Wasserstoff, Alkyl mit 1 - 4 Kohlenstoffatomen, Alkenyl mit 3 oder 4 Kohlenstoffatomen oder 2-Hydroxiethyl, bevorzugt Ethyl, besonders bevorzugt Methyl, m Zahlen von 2 - 20, bevorzugt 2 - 6, p Zahlen von 0 - 19, bevorzugt 0 oder von 1,5 bis 5, bedeuten, mit Ethylenoxid umsetzt.

2. Verwendung der oligomeren Phosphonsäureester nach Anspruch 1 als Flammhemmittel.